# EUROPÄISCHE PATENTANMELDUNG

(11) **EP 1 849 657 A1**
(43) Veröffentlichungstag der Anmeldung: **31.10.2007**
(21) Anmeldenummer: 07008510.5
(22) Anmeldetag: 26.04.2007
(51) Int. Cl.: B60R 13/10

(54) **Halterung für eine KFZ-Kennzeichen-Platte**

(30) Priorität: 29.04.2006 DE 202006006935 U
(71) Anmelder: Heeks, Karl- Heinz, 47652 Weeze (DE)
(72) Erfinder: Heeks, Karl- Heinz, 47652 Weeze (DE)
(74) Vertreter: KEIL & SCHAAFHAUSEN Patentanwälte

(57) **Zusammenfassung**

Die Erfindung betrifft eine Halterung (1) für eine Kfz-Kennzeichen-Platte (5) mit einem an der Unterseite angeordneten Basiselement (2) und einem an diesem an der Oberseite befestigten Rahmen (3). Das Basiselement und der Rahmen bilden zwischen sich einen ersten Aufnahmeraum (25) zur Anordnung der Kfz-Kennzeichen-Platte (5). Neben dem ersten Aufnahmeraum (25) ist mindestens ein zweiter Aufnahmeraum (26) zur Anordnung einer beschrifteten Platte (7), insbesondere einer Fan- oder Werbeplatte, zwischen Basiselement und Rahmen vorgesehen.

## Beschreibung

Die Erfindung betrifft eine Halterung für eine Kfz-Kennzeichen-Platte mit einem an der Unterseite angeordneten Basiselement und einem an diesem an der Oberseite befestigten Rahmen, wobei das Basiselement und der Rahmen zwischen sich einen ersten Aufnahmeraum zur Anordnung der Kfz-Kennzeichen-Platte ausbilden.

Derartige Halterungen für Kennzeichen von Kraftfahrzeugen (Kfz) sind allgemein bekannt und dienen zur Anbringung des Kfz-Kennzeichens am Fahrzeug. Diese Halterungen werden, insbesondere von Kraftfahrzeughändlern, gern als Werbefläche genutzt. Üblicherweise bestehen derartige Halter aus einem schwarzen Kunststoff, wobei häufig auf der unteren, verbreiterten Längsseite des Rahmens eine Beschriftung angebracht ist, die für den Fahrzeughändler wirbt. Da in den meisten Fällen diese Werbe-Beschriftung fest auf der Halterung angebracht ist, muss der gesamte Halter bei einer Änderung der Beschriftung ausgetauscht werden. Ferner wird die Anbringung von Werbe- oder Fan-Beschriftungen am Kfz-Kennzeichen dadurch begrenzt, dass nach den Bestimmungen der Straßenverkehrsordnung umlaufend um das Kfz-Kennzeichen eine weiße Umrandung angeordnet sein muss. Innerhalb dieser weißen Umrandung darf keine Beschriftung angebracht werden, die nicht zum Kfz-Kennzeichen gehört.

Aufgabe der vorliegenden Erfindung ist es, eine Halterung der eingangs genannten Art bereitzustellen, die die Anordnung und ein leichtes Austauschen einer Werbe- oder Fan-Beschriftung an der Halterung ermöglicht.

Diese Aufgabe wird erfindungsgemäß dadurch gelöst, dass neben dem ersten Aufnahmeraum mindestens ein zweiter Aufnahmeraum zur Anordnung einer beschrifteten Platte, insbesondere einer Fan- oder Werbeplatte, zwischen Basiselement und Rahmen vorgesehen ist. In diesem mindestens einen zweiten Aufnahmeraum können Fan- oder Werbeplatten mit Beschriftungen, beispielsweise in Form von beschrifteten rechteckigen Blechplatten, angeordnet werden. Diese beschrifteten Platten sind leicht auswechselbar.

Mit dem Begriff "Beschriftung" werden hierbei Bilder, Symbole, Buchstaben, Zahlen oder sonstige (Sonder-)Zeichen oder beliebige 2-dimensionale kombinierte Gestaltungen aus diesen Elementen zusammengefasst, die farbig oder schwarz-weiß gestaltet sein können.

In einem bevorzugten Ausführungsbeispiel ist an dem Basiselement und/oder am Rahmen mindestens ein Steg angeordnet, der den ersten Aufnahmeraum und den mindestens einen zweiten Aufnahmeraum voneinander abteilt. Hierdurch können Kfz-Kennzeichen-Platte und beschriftete Platte sicher nebeneinander angeordnet werden, so dass diese sich nicht gegeneinander verschieben.

Um sicherzustellen, dass die von der Straßenverkehrsordnung geforderte weiße Umrandung um das Kfz-Kennzeichen verläuft, erstreckt sich der Steg in einem bevorzugten Ausführungsbeispiel über die gesamte Breite der Halterung, wobei der Steg auch nach Anordnung der Kfz-Kennzeichen-Platte und der beschrifteten Platte in den Aufnahmeräumen und der Anbringung der Halterung am Fahrzeug von außen sichtbar bleibt. Die weiße Umrandung ist in diesem Fall an einer Seite auf der Oberseite des Stegs angeordnet und verläuft an den übrigen drei Seiten des Kfz-Kennzeichens entlang des Rahmens an dessen Oberseite. Die neben dem Steg angeordnete beschriftete Platte befindet sich in diesem Fall wie gefordert außerhalb der weißen Umrandung.

Vorzugsweise ist der Rahmen zweiteilig ausgebildet, wobei der erste Teil des Rahmens mit dem Basiselement fest verbunden ist und der zweite Teil des Rahmens mit dem Basiselement schwenkbar verbunden ist, beispielsweise über an der Längsseite des Basiselements angeordnete Scharniere. Der zweite Teil des Rahmens kann dabei, beispielsweise mittels einer Klipsverbindung, an dem ersten Teil des Rahmens lösbar verbunden werden. Hierdurch ist es möglich, die Aufnahmeräume leicht zu öffnen und wieder zu schließen und so die Kfz-Kennzeichen-Platte und/oder die mindestens eine beschriftete Platte einfach auszutauschen. Nach dem Auswechseln kann die Halterung wieder sicher verschlossen werden, so dass sich weder Kfz-Kennzeichen-Platte noch beschriftete Platte aus der Halterung lösen.

In einem besonders bevorzugten Ausführungsbeispiel ist auch der Steg zweiteilig ausgebildet, wobei ein erster Stegteil mit dem ersten Teil des Rahmens und ein zweiter Stegteil mit dem zweiten Teil des Rahmens verbunden sind.

Für eine sichere Anordnung von Kfz-Kennzeichen und beschrifteter Platte in den Aufnahmeräumen ist vorgesehen, dass der Steg an den vertikal verlaufenden Kanten und der Rahmen an den vertikal verlaufenden Innenkanten jeweils eine Nut aufweisen, die zur Anordnung der Kfz-Kennzeichen-Platte und der mindestens einen beschrifteten Platte dient.

Weiterbildungen, Vorteile und Anwendungsmöglichkeiten der Erfindung ergeben sich auch aus der nachfolgenden Beschreibung von Ausführungsbeispielen und den entsprechenden Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: eine erfindungsgemäße Halterung mit einer Kfz-Kennzeichen-Platte und einer beschrifteten Platte in einer Ansicht von oben,
- Fig. 2: die Halterung nach Fig. 1 in einer Ansicht von der Seite,
- Fig. 3: ein weiteres bevorzugtes Ausführungsbeispiel einer erfindungsgemäßen Halterung in einer Ansicht von oben,
- Fig. 4: einen Längsschnitt durch die in Fig. 3 dargestellte Halterung entlang der Linie A-A,
- Fig. 5: einen vergrößerten Ausschnitt aus dem in Fig. 4 dargestellten Längsschnitt und
- Fig. 6: ein weiteres Ausführungsbeispiel einer erfindungsgemäßen Halterung in einer Ansicht von oben,

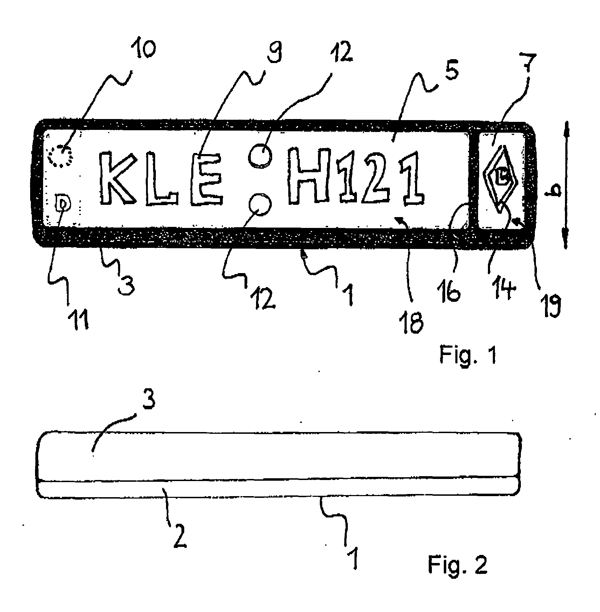

Fig. 1 zeigt eine Halterung 1, in der in einem ersten Aufnahmeraum 25 zwischen einem Basiselement 2 und einem Rahmen 3 eine Kfz-Kennzeichen-Platte 5 angeordnet ist. In einem zweiten Aufnahmeraum 26 ist eine beschriftete Platte 7 vorgesehen, wobei der zweite Aufnahmeraum 26 in Längsrichtung neben dem ersten Aufnahmeraum 25 zwischen Basiselement 2 und Rahmen 3 angeordnet ist.

Auf der Kfz-Kennzeichen-Platte 5 sind das Kfz-Kennzeichen 9, das Europa-Symbol 10, ein Kennzeichen 11, welches das Herkunftsland des Fahrzeugs angibt, amtliche Markierungen 12 und ggf. weitere gesetzlich vorgeschriebene Elemente anbracht. Die beschriftete Platte 7 weist eine Fan- oder Werbe-Beschriftung 14 auf, die beispielsweise das Zeichen eines Fußballclubs oder eine Werbebeschriftung beinhaltet. Zwischen der Kfiz-Kennzeichen-Platte 5 und der beschrifteten Platte 7 ist ein Steg 16 angeordnet, der sich über die gesamte Breite b der Halterung 1 erstreckt und den Aufnahmeraum 25 für die Kfz-Kennzeichen-Platte 5 und den Aufnahmeraum 26 für die beschrifteten Platte 7 voneinander trennt.

Die Halterung 1 setzt sich aus einem an der Unterseite angeordneten, plattenförmigen Basiselement 2 und einem an dem Basiselement 2 befestigten, darüber liegenden Rahmen 3 zusammen. Die Kfz-Kennzeichen-Platte 5 und die beschriftete Platte 7 sind zwischen Basiselement 2 und Rahmen 3 in den ersten Aufnahmeraum 25 bzw. den zweiten Aufnahmeraum 26 aufgenommen, wobei die Aufnahmeräume 25, 26 an drei Seiten durch den Rahmen 3 und an einer Seite durch den Steg 16 seitlich begrenzt werden. Der Steg 16 kann am Rahmen 3 und/oder am Basiselement 2 befestigt sein.

Der Rahmen 3 bildet zusammen mit dem auch nach Anbringung an das Kfz sichtbaren Steg 16 zwei Fenster aus, wobei durch das erste Fenster 18 das Kfz-Kennzeichen 9 zusammen mit den sonstigen Elementen 10, 11 und 12 der in dem ersten Aufnahmeraum 25 angeordneten Kfz-Kennzeichen-Platte 5 und durch das zweite Fenster 19 die Beschriftung 14 der in dem zweiten Aufnahmeraum 26 angeordneten beschrifteten Platte 7 sichtbar sind.

In einem weiteren Ausführungsbeispiel kann die Halterung 1 mehr als einen zweiten Aufnahmeraum 26 aufweisen, so dass die Anordnung von mehr als einer beschrifteten Platte 7 neben der Kfz-Kennzeichen-Platte 5 möglich ist. Hierfür sind vorzugsweise auch mehrere Stege 16 an der Halterung 1 anzuordnen.

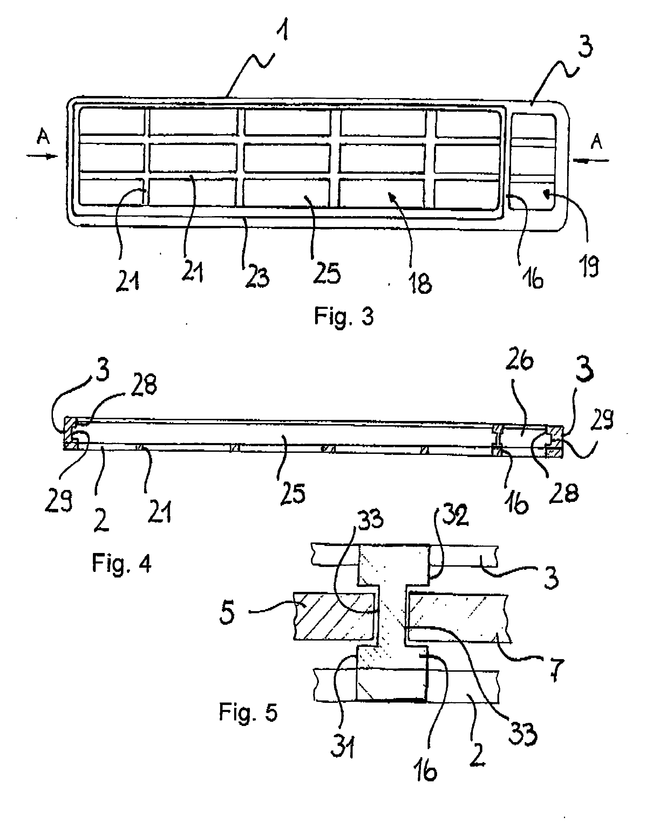

Das anhand von Fig. 3 dargestellte Ausführungsbeispiel einer erfindungsgemäßen Halterung 1 weist ein im Wesentlichen rechteckiges Basiselement 2 auf, das aus einer Anordnung von rechtwinklig zueinander verlaufenden Stegen 21 besteht. In einem weiteren Ausführungsbeispiel kann das Basiselement 2 auch als vollflächige, rechteckige Platte ausgebildet sein.

In Fig. 3 ist die nach der Straßenverkehrsordnung vorgeschriebene weiße Umrandung durch eine schwarze Linie 23 gekennzeichnet, Die Umrandung 23 verläuft jeweils auf der Oberseite des Rahmens 3 entlang dessen linker kurzer Seite und entlang dessen beider Längsseiten sowie auf der Oberseite entlang des Stegs 16, so dass die Umrandung 23 das Kfz-Kennzeichen 9 vollständig einfasst.

In den anhand der Fig. 1 bis 6 dargestellten Ausführungsbeispielen verläuft der Steg 16 jeweils über die gesamte Breite b der Halterung 1. In einem weiteren Ausführungsbeispiel kann der Steg 16 aus mehreren, beispielsweise an dem Basiselement 2 befestigten Teilen bestehen, die über die Breite b der Halterung lediglich in kurzen, nicht miteinander verbundenen Abschnitten vorgesehen sind, In einem weiteren Ausführungsbeispiel kann der Steg 16 auch entlang der Längsrichtung der Halterung 1, senkrecht zur Breite b verlaufen, wobei in diesem Fall der erste Aufnahmeraum 25 und der zweite Aufnahmeraum 26 in Querrichtung nebeneinander liegen.

Das Basiselement 2 und der Rahmen 3, die vorzugsweise aus Kunststoff bestehen, können beispielsweise mittels einer Klipsverbindung miteinander verbunden sein. In einem weiteren Ausführungsbeispiel kann auch ein Teil des Rahmens 3 mit dem Basiselement 2 einstückig gefertigt sein.

Zur sicheren Aufnahme der Kfz-Kennzeichen-Platte 5 bzw. der beschrifteten Platte 7 ist an den vertikalen Innenkanten 28 des Rahmens 3 eine um die Platten 5, 7 umlaufende Nut 29 angeordnet. Entsprechend weist die linke vertikale Kante 31 und die gegenüber liegende, rechte vertikale Kante 32 des Stegs 16 auf gleicher Höhe jeweils eine Nut 33 auf. In diesen Nuten 29, 33, deren Breite der Dicke der Kfz-Kennzeichen-Platte 5 bzw. der beschrifteten Platte 7 entspricht, sind die Kfz-Kennzeichen-Platte 5 bzw. die beschriftete Platte 7 sicher angeordnet.

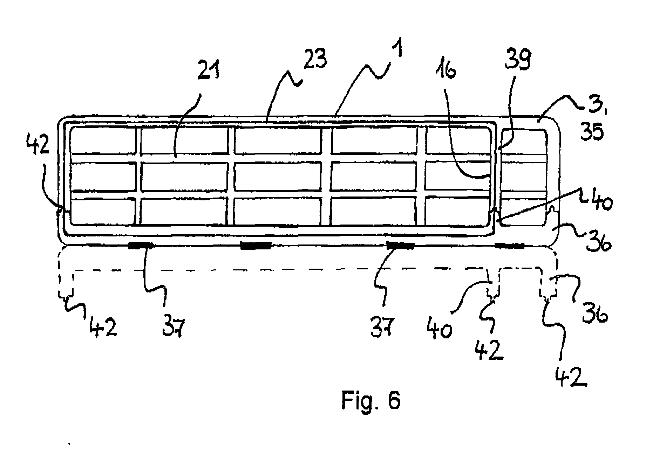

Fig. 6 zeigt ein bevorzugtes Ausführungsbeispiel einer erfindungsgemäßen Halterung 1, bei dem der Rahmen 3 zweiteilig ausgebildet ist. Ein erster Teil des Rahmens 35 ist fest mit dem Basiselement 2 verbunden. Ein zweiter Teil des Rahmens 36 ist mittels Scharnieren 37, die am Basiselement entlang der längeren Seitenkante angeordnet sind, an dem Basiselement 2 schwenkbar befestigt. Entsprechend weist auch der Steg 16 ein mit dem Basiselement 2 und dem ersten Teil des Rahmens 35 fest verbundenes erstes Stegteil 39 und ein zweites Stegteil 40 auf, das mit dem zweiten Teil des Rahmens 36 fest verbunden ist und somit mit diesem geschwenkt werden kann. Die Position des zweiten Teils des Rahmens 36 mit zweitem Stegteil 40 in der Offenstellung nach Verschwenken dieser Einheit um die entlang der äußeren Seitenkante des Basiselements 2 verlaufende Achse ist in Fig. 6 gestrichelt dargestellt.

An den in Querrichtung der Halterung 1 zeigenden Enden des zweiten Rahmenteils 36 und des zweiten Stegteils 40 sind Laschen 42 angeordnet, die mit einer entsprechenden Aufnahme am ersten Rahmenteil 35 bzw. am ersten Stegteil 39, beispielsweise mittels einer Klipsverbindung, lösbar verbunden werden können. Hierdurch wird ein einfacher Austausch der Kfz-Kennzeichen-Platte 5 und/oder der beschriftete Platte 7 und nach dem Austausch ein schneller und einfacher Verschluss der Halterung 1 ermöglicht, so dass sich nach dem Verschließen der Halterung 1 weder Kfz-Kennzeichen-Platte 5 noch beschriftete Platte 7 aus der Halterung 1 lösen können.

In einem bevorzugten Ausführungsbeispiel haben der Rahmen 3 und das Basiselement 2 und damit die Halterung 1 eine Länge von 53 cm und eine Breite b von 13 cm. Das Fenster 18 hat eine Länge von 45 cm und eine Breite von 10 cm, so dass in dem ersten Aufnahmeraum 25 eine geringfügig breitere und gerinfügig längere Kfz-Kennzeichen-Platte 5 untergebracht werden kann. Das Fenster 19 hat in dem bevorzugten Ausführungsbeispiel Abmessungen von 5 cm (in Längsrichtung der Halterung 1) und ebenfalls 10 cm, so dass die in dem zweiten Aufnahmeraum 26 angeordnete beschriftete Platte 7 entsprechend geringfügig größere Abmessungen aufweist.

Durch die oben dargestellte Halterung 1 können Fan- oder Werbebeschriftungen einfach und austauschbar bzw. entsprechend den Vorschriften der Straßenverkehrsordnung in der Kfz-Halterung angeordnet werden. Die erfindungsgemäße Halterung lässt sich außerdem einfach und kostengünstig herstellen.

### Bezugszeichenliste:

- 1: Halterung
- 2: Basiselement
- 3: Rahmen
- 5: Kfz-Kennzeichen-Platte
- 7: beschriftete Platte
- 9: Kfz Kennzeichen
- 10: Europa-Symbol
- 11: Landkennzeichnung
- 12: amtliche Markierung
- 14: Beschriftung
- 16: Steg
- 18: erstes Fenster
- 19: zweites Fenster
- 21: Steg des Basiselements 2
- 23: Umrandung
- 25: erster Aufnahmeraum
- 26: zweiter Aufnahmeraum
- 28: vertikale Innenkante des Rahmens 3
- 29: Nut
- 31: linke vertikale Kante des Stegs 16
- 33: rechte vertikale Kante des Stegs 16
- 33: Nut
- 35: erster Teil des Rahmens 3
- 36: zweiter Teil des Rahmens 3
- 37: Scharnier
- 39: erster Stegteil
- 40: zweiter Stegteil
- 42: Lasche
- b: Breite

## Patentansprüche

1. Halterung (1) für eine Kfz-Kennzeichen-Platte (5) mit einem an der Unterseite angeordneten Basiselement (2) und einem an diesem an der Oberseite befestigten Rahmen (3), wobei das Basiselement und der Rahmen zwischen sich einen ersten Aufnahmeraum (25) zur Anordnung der Kfz-Kennzeichen-Platte ausbilden, **dadurch gekennzeichnet, dass** neben dem ersten Aufnahmeraum mindestens ein zweiter Aufnahmeraum (26) zur Anordnung einer beschrifteten Platte (7), insbesondere einer Fan- oder Werbeplatte, zwischen Basiselement und Rahmen vorgesehen ist.

2. Halterung nach Anspruch 1, **dadurch gekennzeichnet, dass** an dem Basiselement und/oder am Rahmen mindestens ein Steg (16) angeordnet ist, der den ersten Aufnahmeraum und den mindestens einen zweiten Aufnahmeraum voneinander trennt.

3. Halterung nach Anspruch 2, **dadurch gekennzeichnet, dass** sich der Steg über die gesamte Breite (b) der Halterung erstreckt, wobei er auch nach **Anordnung der Kfz-Kennzeichen-Platte und der beschrifteten Platte in den Aufnahmeräumen und der Anbringung der Halterung am Fahrzeug von außen** sichtbar bleibt.

4. Halterung nach einem der vorhergehenden Ansprüche, **dadurch gekennzeichnet, dass** der Rahmen zweiteilig ausgebildet ist, wobei der erste Teil des Rahmens (35) mit dem Basiselement fest verbunden ist und der zweite Teil des Rahmens (36) mit dem Basiselement schwenkbar verbunden ist, wobei der zweite Teil des Rahmens mit dem ersten Teil des Rahmens lösbar, insbesondere mittels einer Klipsverbindung, verbindbar ist.

5. **Halterung nach Anspruch 4, dadurch gekennzeichnet, dass der Steg** zweiteilig ausgebildet ist, wobei ein erster Stegteil (39) mit dem ersten Teil des Rahmens und ein zweiter Stegteil (40) mit dem zweiten Teil des Rahmens verbunden ist.

6. Halterung nach einem der vorhergehenden Ansprüche, **dadurch gekennzeichnet, dass** der Steg beidseitig an der vertikal verlaufenden Kante (31, 33) und der Rahmen an der vertikal verlaufenden Innenkante (28) jeweils eine Nut (33, 29) aufweisen, die zur Anordnung der Kfz-Kennzeichen-Platte und der mindestens einen beschrifteten Platte dient.
